# EUROPÄISCHE PATENTSCHRIFT

(11) **EP 0 931 918 B1**
(45) Veröffentlichungstag und Bekanntmachung des Hinweises auf die Patenterteilung: **17.03.2004**
(21) Anmeldenummer: 98123336.4
(22) Anmeldetag: 09.12.1998
(51) Int. Cl.: F02B 63/04, F02B 77/13, F02F 7/00

(54) **Systemangepasste elastische Lagerung für einen Dieselgenerator**
System adapted elastic suspension for Diesel generator
Appui élastique adapté au système pour un générateur diesel

(30) Priorität: 27.01.1998 DE 19802881
(43) Veröffentlichungstag der Anmeldung: 28.07.1999
(73) Patentinhaber: DEUTZ Aktiengesellschaft, 51063 Köln (DE)
(72) Erfinder: Fischer, Christian, 67141 Neuhofen (DE); Stein, Frithjof, 80689 München (DE)

(56) Entgegenhaltungen:
- EP-A- 0 567 366
- DE-A- 2 312 369
- DE-A- 4 230 103
- DE-U- 1 915 744
- US-A- 3 469 809
- US-A- 5 502 342

## Beschreibung

Die Erfindung betrifft eine Lagerung einer mit einem Aggregat verbundenen Brennkraftmaschine, insbesondere eines Dieselgenerators, wobei die Brennkraftmaschine und das Aggregat über erste Federelemente auf einem Trägerrahmen, der eine akustisch wirksame, körperschallisolierende Zwischenmasse beinhaltet, angeordnet sind und der Trägerrahmen über zweite Federelemente auf einem Fundament gelagert ist.

Eine derartige Lagerung ist aus der US 3,469,809 bekannt. Die in diesem Dokument beschriebene Lagerung weist die Besonderheit auf, dass ein Trägerrahmen vorgesehen ist, der einen Hohlraum aufweist, der mit einem Ballast ausgefüllt ist. Dieser Ballast ist Sand oder ein sandförmiges Material mit einer vorgegebenen Körnungsgröße. Ausdrücklich ausgenommen als Ballast sind Flüssigkeiten oder jegliche Art von festen Materialien.

Der Erfindung liegt die Aufgabe zugrunde, eine Lagerung für eine mit einem Aggregat verbundenen Brennkraftmaschine bereitzustellen, die eine deutliche Reduzierung des von der Brennkraftmaschine und dem Aggregat ausgehenden Körperschalls bewirkt.

Diese Aufgabe wird dadurch gelöst, dass die Zwischenmasse aus zumindest zwei voneinander unabhängigen Komponenten besteht und dass die Federelemente brennkraftmaschinenseitig und aggregatseitig von einem wannenförmigen Rahmen abgedeckt sind. Die zwei Komponenten bewirken eine deutliche Reduzierung des von der Brennkraftmaschine und dem Aggregat ausgehenden Körperschalls. Dabei stellt eine der beiden Komponenten ein Material dar, dass eine hohe spezifische Masse darstellt, während die zweite Komponente eine geringere spezifische Masse aufweist und insbesondere ein Füllmaterial ist. Der Rahmen trägt zur gegenseitigen Ausrichtung der Befestigungen der Federelemente insbesondere beim Aufsetzen der Brennkraftmaschine und des Aggregats bei, dient aber auch zur Reduzierung der Luftschallabstrahlung in den Fundamentbereich.

In Weiterbildung der Erfindung ist der Trägerrahmen als wannenförmige Stahlkonstruktion mit seitlichen Kastenträgern ausgebildet, wobei die Zwischenmasse in zumindest Teilbereichen der Kastenträger angeordnet ist. Diese Teilbereiche sind in Weiterbildung Kammern, die in den Kastenträgern verteilt angeordnet sind. Eine Komponente der Zwischenmasse wird in die Kammern eingesetzt, die zweite Komponente in die dazwischenliegenden Bereiche der Kastenträger.

Die beiden Komponenten der Zwischenmasse sind in weiterer Ausgestaltung vorzugsweise Blechpakete und Sand. Die Blechpakete weisen gegenüber Sand die höhere spezifische Masse auf und sind in Weiterbildung mit Zugankern zusammengeschraubt und liegen beabstandet von den Kastenträgerseitenwänden und den Kammerseitenwänden auf der Kastenträgergrundplatte in den Kammern auf. Dabei verbleibt zwischen den Kastenträgerseitenwänden sowie den Kammerseitenwänden und den Blechpaketen ein geringer Zwischenraum, in den ggf. Gummiplatten eingesetzt werden können. Der feinkörnige trockengeglühte Sand wird in die restlichen Bereiche der Kastenträger eingefüllt. Die Bleche selbst sind gegen Rostbildung konserviert.

Der Wannenboden, der den gesamten Trägerrahmen nach unten hin verschließt, ist ebenso wie der Rahmen vorzugsweise aus entdröhntem Blech hergestellt und dient somit als Schild gegen eine verstärkte Luftstrahlabstrahlung in dem Fundamentbereich. Dieses entdröhnte Blech ist im übrigen ein mit einer Bitumenmasse beschichtetes Stahlblech.

Schließlich ist die Brennkraftmaschine und das Aggregat von einer auf dem Trägerrahmen angeordneten Kapsel umgeben.

Weitere vorteilhafte Ausgestaltungen der Erfindung sind der Zeichnungsbeschreibung zu entnehmen, in der ein in den Figuren dargestelltes Ausführungsbeispiel näher beschrieben ist.

Es zeigen:
- Figur 1:: ein auf ein Trägerrahmen aufgesetzten Dieselgenerator,
- Figur 2:: einen Trägerrahmen mit zusätzlicher, den Dieselgenerator umgebenden Kapsel,
- Figur 3:: eine perspektivische Ansicht des Trägerrahmens,
- Figur 4:: eine perspektivische Ansicht des vollständigen Trägerrahmens,
- Figur 5:: einen Längsschnitt durch den Trägerrahmen nach Figur 6,
- Figur 6:: eine Draufsicht auf den Trägerrahmen und
- Figuren 7a bis 7c:: Querschnitte durch den Trägerrahmen nach Figur 6.

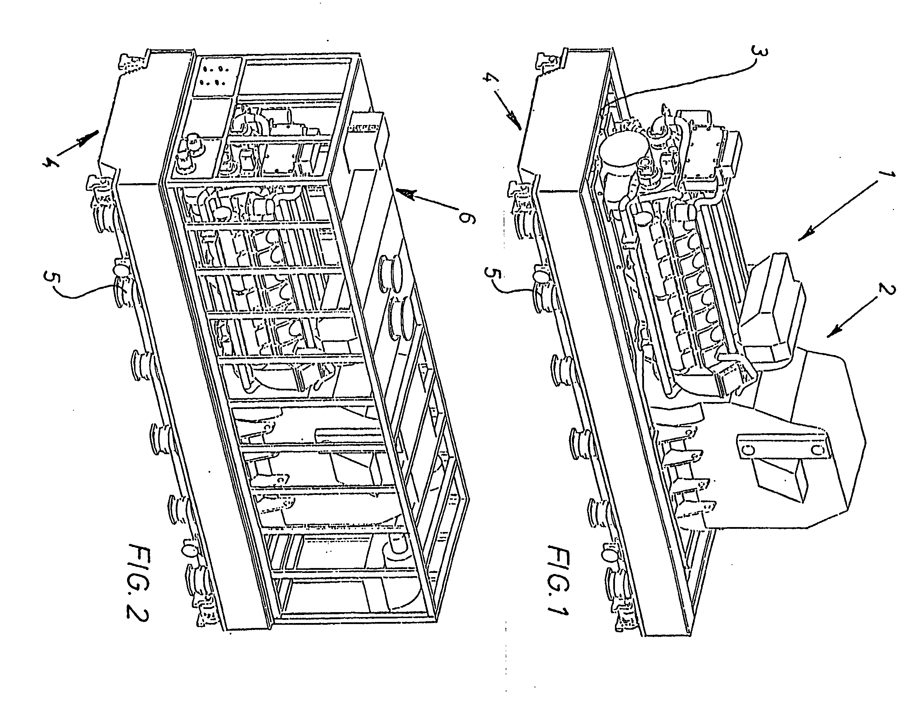

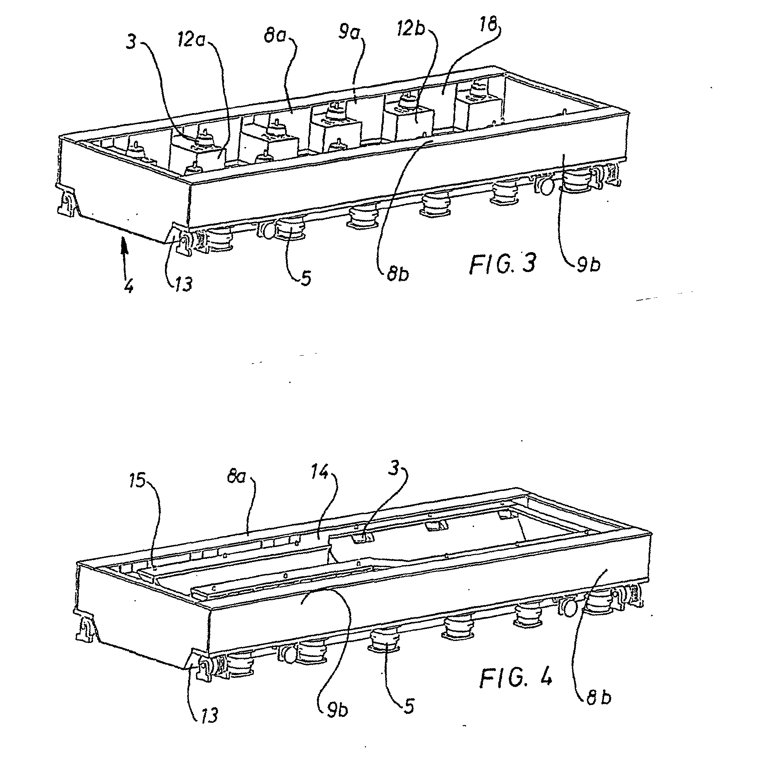

In Figur 1 ist eine Brennkraftmaschine 1 mit einem durch eine drehelastische Kupplung verbundenen Generator 2 über erste Federelemente 3 (Figur 3) auf einem Trägerrahmen 4 gelagert, während der Trägerrahmen 4 über zweite Federelemente 5 auf einem nicht dargestellten Fundament angeordnet ist.

Die Brennkraftmaschine 1 ist beispielsweise eine 12-zylindrige Dieselbrennkraftmaschine in V-Bauart mit einer Leistung von ca. 1.300 kW und einem Gewicht von knapp 5.000 Kilogramm oder eine 16-zylindrige Dieselbrennkraftmaschine in V-Bauart mit einer Leistung von ca. 1.750 kW und einem Gewicht von ca. 6.500 Kilogramm. Der Generator 2 ist entsprechend an die Leistung der Brennkraftmaschine 1 angepaßt und hat im ersten Falle eine Leistung von 1.800 kW bei einem Gewicht von 6.500 Kilogramm und in zweiten Fall eine Leistung von ca. 2.400 kW bei einem Gewicht von 7.400 Kilogramm. Diese Dieselgeneratoren sind in erster Linie für einen dieselelektrischen Antrieb eines Schiffes ausgelegt. Hierbei können mehrerer dieser Aggregate in einem Schiff zur Bereitstellung der nötigen Antriebsleistung vorgesehen sein. Da gerade bei einem derartigen Schiffsantrieb in der Vergangenheit die Dieselgeneratoren die Hauptgeräuscherzeuger waren, ist hier auf eine körperschallisolierende Lagerung dieser Aggregate zu achten. Entsprechend muß die Lagerung sorgfältig ausgelegt sein und - wie in Figur 2 dargestellt - zusätzlich die Brennkraftmaschine 1 und der Generator 2 von einer Kapsel 6 umgeben sein. Hierbei ist in der Figur 2 die Kapsel teilweise geöffnet dargestellt.

In den Figuren 3 und 4 ist der Trägerrahmen 4 teilmontiert (Figur 3) und vollständig montiert (Figur 4) dargestellt. Der Trägerrahmen weist seitliche Kastenträger 8a, 8b auf, an die nach innen auskragende Kammern 12a, 12b angebunden sind. In diese Kammern werden auf der Kastenträgergrundplatte 10, die ca. 40 mm dick sind, aufliegend Blechpakete 7a, 7b eingelegt, an denen die ersten Federelemente 3 befestigt sind. Zwischen den Kammern 12a, 12b werden die Kastenträger 8a, 8b mit feinkörnigen trockengeglühtem Sand (18) verfüllt. Zwischen den Blechpaketen 7a, 7b und den Kastenträgerseitenwänden 9a, 9b sowie den übrigen Kammerseitenwänden verbleibt ein Zwischenraum von ca. 3 mm, der mit Gummiplatten ausgefüllt werden kann. Auf die Federelemente wird gemäß Figur 4 ein Rahmen 14 aufgelegt, der ebenso wie der Wannenboden 13 aus 10 mm dickem entdröhnten Blech (Sandwichblech) oder auch nur aus 10 mm dickem Stahlblech besteht. Dieser ebenfalls wannenförmig ausgebildete Rahmen 14 richtet einerseits die brennkraftmaschinenseitigen und aggregateseitigen Befestigungsbolzen 15 aus, trägt aber insbesondere zur weiteren Versteifung und Reduzierung der Luftschallabstrahlung bei.

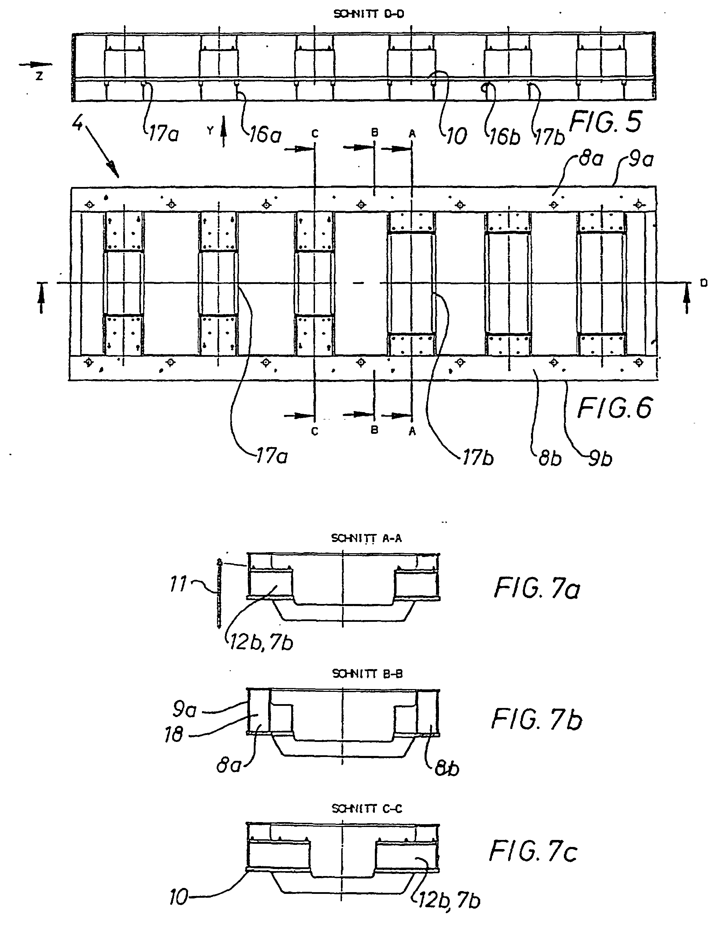

Figur 6 zeigt eine Drastischt auf den Trägerrahmen 4, wobei hierbei der Rahmen 14 noch nicht montiert ist. Die Figuren 5 und 7a bis 7c zeigen die entsprechend gekennzeichneten Schnitte. Ergänzend zu der bisherigen Beschreibung ist diesen Figur zu entnehmen, daß die Kammern 12a, 12b jeweils durch Rippen 16a, 16b miteinander verbunden sind. Diese Rippen 16a, 16b sind mit dem Wannenboden 13 verbunden und weisen auf dem oberen freien Ende Versteifungen 17a, 17b auf. Insbesondere den Figuren 7a bis 7c ist zu entnehmen, wie die Blechpakete 7a, 7b mit vier beziehungsweise sechs Zugankern 11 zusammengeschraubt und in den Kammern 12a, 12b angeordnet sind.

Mit diesem System werden von akustischer Seite folgende Kriterien erfüllt:

Es wird ein Starrkörpermodem kleiner als 20 Hertz erreicht. Dieses Kriterium bestimmt in Verbindung mit den Federstreifen der ersten Federelemente 3 und zweiten Federelemente 5 die erforderliche Masse der Zwischenmasse (m_{z}) zuzüglich der Kapselmasse (mₖ). Daraus errechnet sich die Gesamtmasse m = m_{z} + mₖ. Bei dem 12-Zylinder-Motor beträgt m_{z} ca. 10.300 Kilogramm, mₖ ca. 2.420 Kilogramm und somit m ca. 12.720 Kilogramm. Beim 16-Zylinder-Motor sind diese Werte m_{z} = 11.940 Kilogramm, mₖ = 2.560 Kilogramm und m = 14.500 Kilogramm. Die ersten Federelemente 3 sind im übrigen so ausgelegt, daß hier bei 500 Hertz die erste Eigenfrequenz und bei 1.000 Hertz die zweite Eigenfrequenz liegt. Die zweiten Federelemente 5 sind so ausgelegt, daß hier die erste Eigenfrequenz bei 136 Hertz liegt. Die Anzahl der ersten und zweiten Federelemente 3, 5 beträgt bei dem 12-Zylinder-Motor 10 und dem 16-Zylinder-Motor 12. Dadurch wird zwischen dem Dieselgenerator und dem Trägerrahmen eine fiktive Abstimmfrequenz (dynamische Steifigkeit) von etwa 8 Hertz erreicht, während im unteren Bereich zwischen dem Trägerrahmen und dem Fundament eine Eigenfrequenz von 3 Hertz erreicht wird.

## Patentansprüche

1. Lagerung einer mit einem Aggregat verbundenen Brennkraftmaschine (1), insbesondere eines Dieselgenerators, wobei die Brennkraftmaschine (1) und das Aggregat über erste Federelemente (3) auf einem Trägerrahmen (4), der eine akustisch wirksame, körperschallisolierende Zwischenmasse beinhaltet, angeordnet sind und der Trägerrahmen (4) über zweite Federelemente (5) auf einem Fundament gelagert ist,
***dadurch gekennzeichnet, dass*** die Zwischenmasse aus zumindest zwei von einander unabhängigen Komponenten besteht und dass die Federelemente (3) brennkraftmaschinenseitig und aggregatseitig von einem wannenförmigen Rahmen (14) abgedeckt sind.

2. Lagerung nach Anspruch 1,
***dadurch gekennzeichnet, dass*** der Trägerrahmen (4) als wannenförmige Stahlkonstruktion mit seitlichen Kastenträgern (8a, 8b) ausgebildet ist und dass die Zwischenmasse in zumindest Teilbereichen der Kastenträger (8a, 8b) angeordnet ist.

3. Lagerung nach Anspruch 2,
***dadurch gekennzeichnet, dass*** die Kastenträger (8a, 8b) Kammern (12a, 12b) aufweisen, wobei die Zwischenmasse in die Kastenträger (8a, 8b) und die Kammern (12a, 12b) einsetzbar ist.

4. Lagerung nach einem der vorherigen Ansprüche,
***dadurch gekennzeichnet, dass*** eine erste Komponente der Zwischenmasse Blechpakete (7a, 7b) sind.

5. Lagerung nach einem der vorherigen Ansprüche,
***dadurch gekennzeichnet, dass*** eine zweite Komponente der Zwischenmasse Sand ist.

6. Lagerung nach einem der Ansprüche 3 bis 5,
***dadurch gekennzeichnet, dass*** die Blechpakete (7a, 7b) mit Zugankern (11) zusammengeschraubt sind und beabstandet von Kastenträgerseitenwänden (9a, 9b) und den Kammerseitenwänden auf der Kastenträgergrundplatte (10) in den Kammern (12a, 12b) aufliegen.

7. Lagerung nach einem der Ansprüche 3 bis 6,
***dadurch gekennzeichnet, dass*** die zwischen dem Kastenträgerseitenwänden (9a, 9b) sowie den Kammerseitenwänden und den Blechpaketen (7a, 7b) gebildeten Zwischenräume mit feinkörnigem trockengeglühtem Sand verfüllt werden.

8. Lagerung nach einem der Ansprüche 4 bis 7,
***dadurch gekennzeichnet, dass*** an den Blechpaketen (7a, 7b) die ersten Federelemente (3) befestigbar sind.

9. Lagerung nach einem der vorherigen Ansprüche,
***dadurch gekennzeichnet, dass*** ein Wannenboden (13) vorgesehen ist, der aus entdröhntem Blech hergestellt ist.

10. Lagerung nach einem der vorherigen Ansprüche,
***dadurch gekennzeichnet, dass*** die Brennkraftmaschine (1) und das Aggregat von einer auf dem Trägerrahmen (4) angeordneten Kapsel (6) umgeben sind.

## Claims

1. Bearing arrangement for an internal combustion engine (1), in particular a diesel generator, connected to a unit, the internal combustion engine (1) and the unit being arranged, via first spring elements (3), on a support frame (4) which includes an acoustically active intermediate mass which insulates structure-borne sound, and the support frame (4) being mounted on a pedestal via second spring elements (5), **characterized in that** the intermediate mass comprises at least two components which are independent of one another, and **in that** the spring elements (3) on the internal combustion engine side and the unit side are covered by a tub-like frame (14).

2. Bearing arrangement according to Claim 1, **characterized in that** the support frame (4) is designed as a tub-like steel structure with lateral box-section supports (8a, 8b), and **in that** the intermediate mass is arranged in at least partial regions of the box-section supports (8a, 8b).

3. Bearing arrangement according to Claim 2, **characterized in that** the box-section supports (8a, 8b) have chambers (12a, 12b), it being possible for the intermediate mass to be inserted into the box-section supports (8a, 8b) and the chambers (12a, 12b).

4. Bearing arrangement according to one of the preceding claims, **characterized in that** a first component of the intermediate mass is formed by sets of metal sheets (7a, 7b).

5. Bearing arrangement according to one of the preceding claims, **characterized in that** a second component of the intermediate mass is sand.

6. Bearing arrangement according to one of Claims 3 to 5, **characterized in that** the sets of metal sheets (7a, 7b) are screwed together by tie rods (11) and, at a distance from box-section support side walls (9a, 9b) and the chamber side walls, bear on the box-section support base plate (10)in the chambers (12a, 12b).

7. Bearing arrangement according to one of Claims 3 to 6, **characterized in that** the spaces which are formed between the box-section support side walls (9a, 9b) and the chamber side walls and the sets of metal sheets (7a, 7b) are filled with fine-grained, dry-calcined sand.

8. Bearing arrangement according to one of Claims 4 to 7, **characterized in that** the first spring elements (3) can be secured to the sets of metal sheets (7a, 7b).

9. Bearing arrangement according to one of the preceding claims, **characterized in that** there is a tub base (13) which is made from sound-absorbing metal sheet.

10. Bearing arrangement according to one of the preceding claims, **characterized in that** the internal combustion engine (1) and the unit are surrounded by a capsule (6) arranged on the support frame (4).

## Revendications

1. Appui pour un moteur à combustion interne (1) relié à un groupe, en particulier d'un générateur diesel, dans lequel le moteur à combustion interne (1) et le groupe sont disposés par l'intermédiaire de premiers éléments élastiques (3) sur un châssis de support (4), qui comporte une masse intermédiaire efficace au point de vue acoustique pour l'isolation acoustique de la structure, et le châssis de support (4) est monté sur une fondation par l'intermédiaire de deuxièmes éléments élastiques (5), **caractérisé en ce que** la masse intermédiaire se compose d'au moins deux composants indépendants l'un de l'autre et **en ce que** les éléments élastiques (3) sont masqués du côté du moteur à combustion interne et du côté du groupe par un châssis (14) en forme de cuvette.

2. Appui selon la revendication 1, **caractérisé en ce que** le châssis de support (4) a la forme d'une structure en acier en forme de cuvette avec des poutres latérales en caisson (8a, 8b) et **en ce que** la masse intermédiaire est disposée au moins dans des zones partielles des poutres en caisson (8a, 8b).

3. Appui selon la revendication 2, **caractérisé en ce que** les poutres en caisson (8a, 8b) présentent des chambres (12a, 12b), la masse intermédiaire pouvant être introduite dans les poutres en caisson (8a, 8b) et dans les chambres (12a, 12b).

4. Appui selon l'une quelconque des revendications précédentes, **caractérisé en ce qu'**un premier composant de la masse intermédiaire est formé par des paquets de tôles (7a, 7b).

5. Appui selon l'une quelconque des revendications précédentes, **caractérisé en ce qu'**un deuxième composant de la masse intermédiaire est le sable.

6. Appui selon l'une quelconque des revendications 3 à 5, **caractérisé en ce que** les paquets de tôles (7a, 7b) sont solidarisés par des tirants vissés (11) et sont placés dans les chambres (12a, 12b) sur la plaque de fond (10) des poutres en caisson, à distance des parois latérales (9a, 9b) des poutres en caisson et des parois latérales des chambres.

7. Appui selon l'une quelconque des revendications 3 à 6, **caractérisé en ce que** les espaces intermédiaires formés entre les parois latérales (9a, 9b) des poutres en caisson ainsi qu'entre les parois latérales des chambres et les paquets de tôles (7a, 7b) sont remplis de sable à grains fins séché à chaud.

8. Appui selon l'une quelconque des revendications 4 à 7, **caractérisé en ce que** les premiers éléments élastiques (3) peuvent être fixés aux paquets de tôles (7a, 7b).

9. Appui selon l'une quelconque des revendications précédentes, **caractérisé en ce qu'**il est prévu un fond de cuvette (13), qui est fabriqué en tôle insonorisée.

10. Appui selon l'une quelconque des revendications précédentes, **caractérisé en ce que** le moteur à combustion interne (1) et le groupe sont entourés d'une enveloppe (6) disposée sur le châssis de support (4).
